(19) Europäisches Patentamt
European Patent Office
Office européen des brevets

(11) Veröffentlichungsnummer: **0 297 448 B1**

(12) **EUROPÄISCHE PATENTSCHRIFT**

(45) Veröffentlichungstag der Patentschrift: **09.12.92**

(51) Int. Cl.$^5$: **C09B 67/22**, C09B 29/42, C09D 11/02

(21) Anmeldenummer: **88110068.9**

(22) Anmeldetag: **24.06.88**

(54) **Farbmittelmischungen, enthaltend Isochinolinderivate, ihre Verwendung in Druckfarben sowie neue Isochinolinderivate.**

(30) Priorität: **30.06.87 DE 3721498**

(43) Veröffentlichungstag der Anmeldung:
**04.01.89 Patentblatt 89/01**

(45) Bekanntmachung des Hinweises auf die Patenterteilung:
**09.12.92 Patentblatt 92/50**

(84) Benannte Vertragsstaaten:
**CH DE FR GB IT LI**

(56) Entgegenhaltungen:
**EP-A- 0 074 048**
**FR-A- 2 110 435**
**GB-A- 1 435 516**

(73) Patentinhaber: **BASF Akfiengesellschaft**
**Carl-Bosch-Strasse 38**
**W-6700 Ludwigshafen(DE)**

(72) Erfinder: **Kowarsch, Heinrich, Dr.**
**Kuernbacher Strasse 34**
**W-7519 Oberderdingen(DE)**
Erfinder: **Dix, Johannes Peter, Dr.**
**Ludwigshafener Strasse 125**
**W-6708 Neuhofen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die vorliegende Erfindung betrifft neue Farbmittelmischungen, enthaltend Isochinolinazopigmente und Isochinolinazofarbstoffe, ihre Verwendung in Druckfarben sowie neue Isochinolinazofarbstoffe.

Aus der EP-A-74048 sind Isochinolinazopigmente bekannt, die sich besonders für den Einsatz in Druckfarben eignen.

Die Farbkraft oder Farbstärke sowie die Transparenz dieser Pigmente nimmt mit kleiner werdender Kristallgröße zu. Deshalb besteht Interesse daran, die Kristallteilchen gezielt zu verkleinern.

Eine Verringerung der Kristallgröße führt jedoch zu einer entsprechenden Vergrößerung der Viskosität der Druckfarbe, in denen die Pigmente enthalten sind, und zu einer Glanzverschlechterung der damit hergestellten Drucke. Die praktische Verwendung setzt damit eine untere Grenze für die Kristallgröße.

Aufgabe der vorliegenden Erfindung war es, neue Farbmittelmischungen bereitzustellen, die die genannten Nachteile nicht mehr aufweisen und bei denen die Farbkraft der Isochinolinazopigmente besser ausgenutzt ist.

Es wurden nun neue Farbmittelmischungen gefunden, enthaltend Isochinolinazopigmente der Formel I

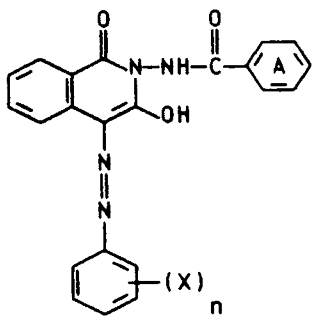

(I),

in der

X für Chlor, Brom, $C_1$-$C_4$-Alkoxy oder Nitro und

n für 1, 2 oder 3 stehen und der Ring A substituiert sein kann,

und Isochinazofarbstoffe der Formel II

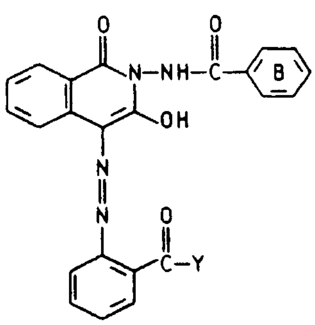

(II),

in der

Y für $C_6$-$C_{20}$-Alkoxy, das gegebenenfalls durch ein oder mehrere Sauerstoffatome unterbrochen ist, steht und der Ring B substituiert sein kann.

Alle in den obengenannten Formeln I und II auftretenden Alkylreste können sowohl geradkettig als auch verzweigt sein.

X in Formel I steht beispielsweise für Methoxy, Ethoxy, Propoxy, Isopropoxy, Butoxy, Isobutoxy, sec-Butoxy oder tert-Butoxy.

Y in Formel II steht beispielsweise für Hexyloxy, 2-Methylpentyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Tridecyloxy, 3,5,5,7-Tetramethylnonyloxy, Isotridecyloxy, Tetradecyloxy, Pentadecyloxy, Hexadecyloxy, Heptadecyloxy, Octadecyloxy, Nonadecyloxy, Eicosyloxy (die Bezeichnungen Isooctyl, Isononyl, Isodecyl und Isotridecyl sind Trivialbezeichnungen und stammen von den nach der Oxosynthese erhaltenen Alkoholen - vgl. dazu

Ullmanns Enzyklopädie der technischen Chemie, 4. Auflage, Band 7, Seiten 215 bis 217, sowie Band 11, Seiten 435 und 436), 2-Methoxyethoxy, 2-Ethoxyethoxy, 2-Butoxyethoxy, 3-Methoxypropoxy, 2-Methoxypropoxy, 2-Methoxybutoxy, 2-Ethoxybutoxy, 4-Methoxybutoxy, 4-Ethoxybutoxy, 3,6-Dioxahexyloxy, 3,6-Dioxaoctyloxy, 3,6-Dioxadecyloxy, 3,6,9-Trioxadecyloxy, 3,6,9-Trioxaundecyloxy oder 3,6,9-Trioxatridecyloxy.

Für den Fall, daß die Alkylkette des Restes Y durch Sauerstoffatome unterbrochen ist, sind solche Alkylreste bevorzugt, die durch ein, zwei oder drei Sauerstoffatome unterbrochen sind.

Für den Fall, daß der Ring A in Formel I und/oder der Ring B in Formel II substituiert ist, kommen als Substituenten z.B. $C_1$-$C_4$-Alkyl, $C_1$-$C_4$-Alkoxy, Nitro oder Halogen in Betracht. Die Ringe A und B können dabei gleich oder verschieden substituiert sein und jeweils einen oder mehrere Substituenten aufweisen.

Isochinolinazofarbstoffe der Formel II sind neu. Sie lassen sich nach an sich bekannter Weise durch Diazotierung der entsprechenden Anthranilsäureester und Kupplung auf Isochinoline, wie sie aus der EP-A-74048 bekannt sind, herstellen.

Farbmittelmischungen, die Isochinolinazofarbstoffe der Formel II enthalten, in der Y für $C_8$-$C_{14}$-Alkoxy steht, sind bevorzugt.

Besonders bevorzugt sind Farbmittelmischungen, die Isochinolinazofarbstoffe der Formel II enthalten, in der Y für 2-Ethylhexyl, Isononyl, Decyl, Isodecyl oder Isotridecyl steht. Wie oben bereits ausgeführt, handelt es sich bei den Isononyl-, Isodecyl und Isotridecylverbindungen um Isomerengemische.

Isochinolinazopigmente der Formel I sind aus der EP-A-74048 bekannt.

Bevorzugt sind solche Farbmittelmischungen, die Isochinolinazopigmente der Formel I enthalten, die sich von der Diazokomponente 2-Nitroanilin, 2-Methoxyanilin, 4- Chlor-2-nitroanilin, 4-Methoxy-2-nitroanilin oder 2,5-Dichloranilin ableiten.

Die Isochinolinazopigmente der Formel I können auch als Mischungen vorliegen.

Die neuen Farbmittelmischungen enthalten Isochinolinazopigmente der Formel I oder Gemische davon und Isochinolinazofarbstoffe der Formel II oder Gemische davon im Gewichtsverhältnis 55:45 bis 95:5, vorzugsweise 70:30 bis 90:10.

Das günstigste Mengenverhältnis des langkettigen Farbstoffs der Formel II zum Pigment der Formel I richtet sich letztlich nach den für die Druckfarbe angestrebten Eigenschaften und ist durch einfache Vorversuche leicht zu ermitteln.

Die Herstellung der neuen Farbmittelmischungen kann entweder durch Mischen der wasserfeuchten Presskuchen von Pigment I und Farbstoff II oder durch Trockenmischung von Pigment I und Farbstoff II erfolgen. Es ist aber auch möglich, die jeweiligen Diazokomponenten von Pigment I und Farbstoff II getrennt zu diazotieren und dann gemeinsam auf die Isochinolinkupplungskomponente zu kuppeln.

Die erfindungsgemäßen Farbmittelmischungen finden vorteilhaft Verwendung zur Herstellung von Tiefdruckfarben, insbesondere zur Herstellung von Tiefdruckfarben auf Toluolbasis. Dazu werden sie in üblicher Weise in die Druckfarben eingearbeitet.

Die erfindungsgemäßen Farbmittelmischungen zeichnen sich beim Einsatz im Toluoltiefdruck gegenüber den bekannten Isochinolinazopigmenten der Formel I dadurch aus, daß die Drucke glänzender, lasierender und auf Naturpapier farbstärker sind. Außerdem schlagen die Drucke durch dünne Papiere weniger durch. Diese verbesserten Eigenschaften werden auch beim Lagern der Druckfarbe beibehalten, so daß Korrekturen vor ihrem Gebrauch entfallen.

Die folgenden Beispiele sollen die Erfindung näher erläutern.

Beispiel 1

160 g Anthranilsäureisotridecylester wurden in 160 g Eisessig und 160 ml Eiswasser mit 150 ml 32 gew.%iger Salzsäure verrührt. Nach Zugabe von weiteren 600 ml Eiswasser wurden 150 g 23 gew.%ige Natriumnitritlösung schnell zugefügt. Es wurde mit 2000 ml Eiswasser aufgefüllt und ca. 30 Minuten nachgerührt.

Diese Diazoniumsalzlösung ließ man in eine Mischung aus 155 g der Kupplungskomponente der Formel

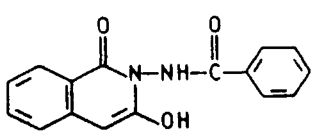
,

5000 ml Wasser sowie 280 g 50 gew.%iger Natronlauge zulaufen. Es stellte sich dabei eine Temperatur von 10 bis 15 °C und ein pH-Wert von 8 bis 9 ein. Man rührte 30 Minuten nach, saugte die Suspension ab, wusch mit Wasser neutral und saugte den Rückstand möglichst trocken.

Man erhielt 1020 g eines Presskuchens, dessen Farbstoffgehalt 26 Gew.% betrug.

500 g dieses wasserfeuchten Pressgutes wurden bei 70 °C im Vakuumtrockenschrank getrocknet. Man erhielt 130 g eines grünstichig gelben Farbstoffpulvers (Fp: 168 bis 172 °C).

Beispiel 2

85 g des gemäß der EP-A-74048 hergestellten Pigments der Formel

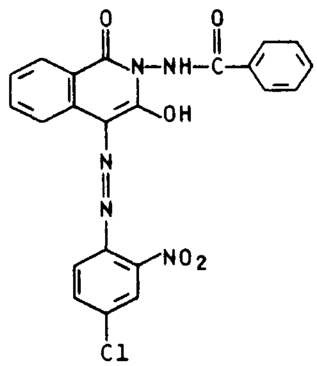

wurden mit 15 g des Farbstoffs aus Beispiel 1 gemahlen und gemischt. Man erhielt eine gelbe Farbmittelpräparation.

Zur Herstellung einer Toluol-Tiefdruckfarbe wurden 12 g dieser Präparation mit 138 g einer handelsüblichen phenolmodifizierten Kolophoniumharzlösung (ca. 35 gew.%ig in Toluol) und 300 g Stahlkugeln (Durchmesser: 2 bis 3 mm) 30 Minuten in einem Dispergator dispergiert und mit Toluol auf Druckviskosität eingestellt.

Die mit dieser Tiefdruckfarbe hergestellten Drucke waren lasierender, glänzender und farbstärker als entsprechend hergestellte Drucke, die nur das aus der EP-A-74048 bekannte Pigment allein enthielten.

Beispiel 3

690 g Presskuchen (13 gew.%ig) eines Pigmentes der Formel Ia

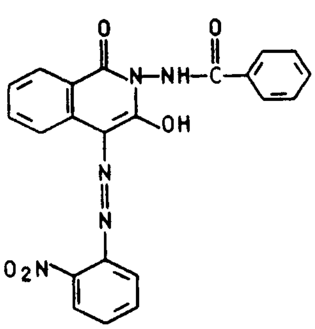

(Ia)

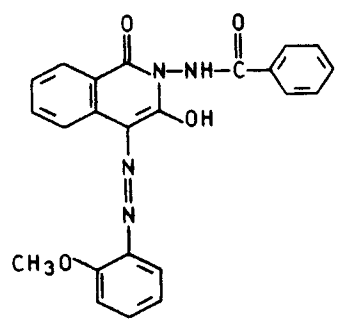

(Ib)

wurden mit 10 g Presskuchen (14 gew.%ig) eines Pigmentes der Formel Ib und 30 g Presskuchen (36 gew.%ig) eines Farbstoffs der Formel

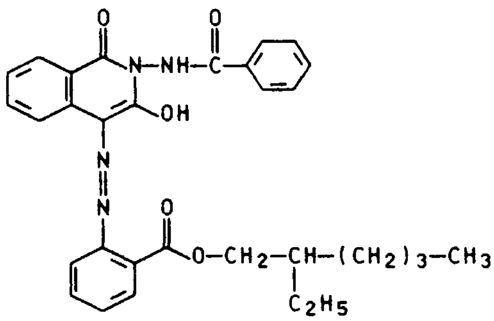

in 500 ml Wasser bei pH 7 bis 8 ca. 1 Stunde bei 60° C verrührt (Die Herstellung beider Pigmente erfolgte gemäß EP-A-74048). Danach wurde abgesaugt, mit Wasser neutral gewaschen und getrocknet. Man erhielt 100 g einer rotstichig gelben Farbmittelpräparation. Sie wies ähnlich günstige Eigenschaften auf, wie die in Beispiel 2 hergestellte Präparation.

Beispiel 4

19 g eines gemäß der EP-A-74048 hergestellten Pigments der Formel

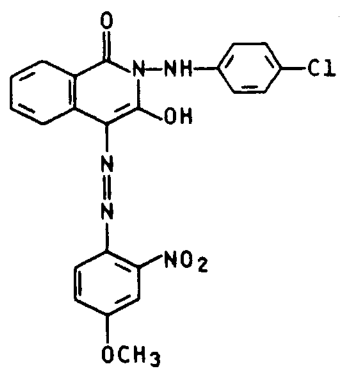

und 6 g des analog Beispiel 1 hergestellten Farbstoffs (jedoch mit Anthranilsäureisononylester als Diazokomponente) wurden zusammen mit 300 g Stahlkugeln (Durchmesser: 2 mm), 25 ml Toluol und 100 g eines handelsüblichen Kalkresinats (50 gew.%ig in Toluol/Methylcyclohexan 1:1) 30 Minuten in einem Dispergator dispergiert. Nach Abtrennen der Kugeln wurde mit einer Bindemittelmischung (75 g der genannten Kalkresinatlösung und 25 g Toluol) auf einen Pigmentgehalt von 10 Gew.% aufgelackt und weitere 5 Minuten dispergiert.

Die erhaltene orangefarbene Druckfarbe ergab lasierende farbstarke Drucke, mit deutlich besserem Glanz als entsprechend nur mit dem Pigment allein hergestellte Drucke.

Beispiel 5

40 g des nach der EP-A-74048 erhaltenen Pigments der Formel

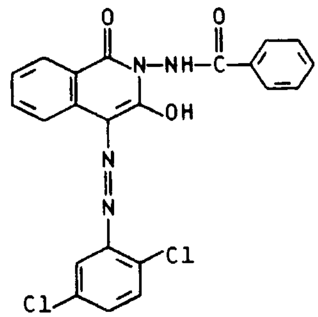

wurden zusammen mit 4 g eines analog Beispiel 1 hergestellten Farbstoffs (jedoch mit Anthranilsäuredecylester als Diazokomponente) gemahlen und gemischt.

Eine damit analog Beispiel 2 hergestellte Tiefdruckfarbe ergab farbstarke, grünstichig gelbe, gut glänzende Drucke mit hoher Lasur.

Beispiel 6 (Mischkupplung)

30,5 g 4-Methyl-2-nitroanilin wurden auf bekannte Weise (EP-A-74048) diazotiert und klärfiltriert (Lösung A).

6,5 g Anthranilsäureisotridecylester wurden analog Beispiel 1 diazotiert und ebenfalls klärfiltriert (Lösung B).

58 g der Kupplungskomponente aus Beispiel 1 wurden in 32 g Natronlauge (50 gew.%ig) und 1000 ml Wasser gelöst und mit Eis auf +5°C gekühlt (Lösung C).

Lösung A und Lösung B wurden vereinigt und mit Eis auf 0°C gekühlt. Innerhalb von 15 Minuten ließ man nun Lösung C zulaufen, wobei sich ein pH-Wert von ca. 3,5 und eine Temperatur von +3°C einstellte. Der Kupplungsansatz wurde 2 Stunden nachgerührt und bei Raumtemperatur abgesaugt. Nach Waschen und Trocknen erhielt man 90 g einer rotstichig gelben Farbmittelpräparation. Die damit hergestellte Druckfarbe zeigte ähnlich gute Eigenschaften wie die in Beispiel 4 erhaltene Präparation.

## Patentansprüche

**1.** Farbmittelmischungen, enthaltend Isochinolinazopigmente der Formel I

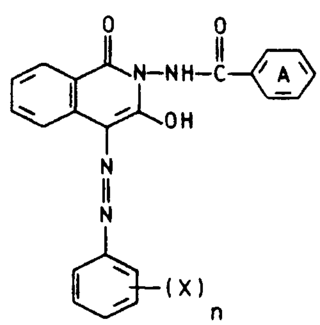

(I),

in der

X für Chlor, Brom, $C_1$-$C_4$-Alkoxy oder Nitro und

n für 1, 2 oder 3 stehen und der Ring A substituiert sein kann,

und Isochinolinazofarbstoffe der Formel II

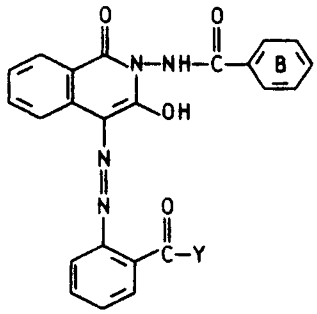

(II),

in der

Y für $C_6$-$C_{20}$-Alkoxy, das gegebenenfalls durch ein oder mehrere Sauerstoffatome unterbrochen ist, steht und der Ring B substituiert sein kann.

**2.** Farbmittelmischungen gemäß Anspruch 1, dadurch gekennzeichnet, daß Y für $C_8$-$C_{14}$-Alkoxy steht.

**3.** Farbmittelmischungen gemäß Anspruch 1, dadurch gekennzeichnet, daß sie 55 bis 95 Gew.-% an Isochinolinazopigmenten der Formel I und 45 bis 5 Gew.-% an Isochinazofarbstoffen der Formel II enthalten.

**4.** Isochinolinazofarbstoffe der Formel II,

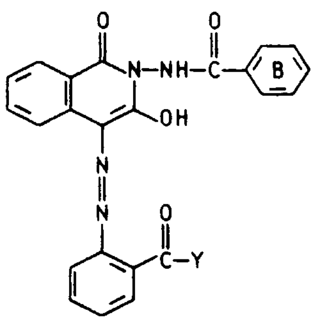

(II),

in der Y für $C_6$-$C_{20}$-Alkoxy, das gegebenenfalls durch ein oder mehrere Sauerstoffatome unterbrochen ist, steht und der Ring B substituiert sein kann.

**5.** Verwendung der Farbmittelmischungen gemäß Anspruch 1 in Druckfarben.

**Claims**

**1.** A colorant mixture comprising an isoquinoline-azo pigment of the formula I

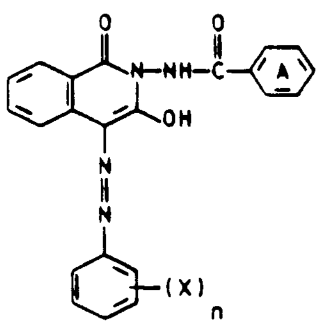

(I)

where

X is chlorine, bromine, $C_1$-$C_4$-alkoxy or nitro,

n is 1, 2 or 3, and the ring A can be substituted,

and an isoquinoline-azo dye of the formula II

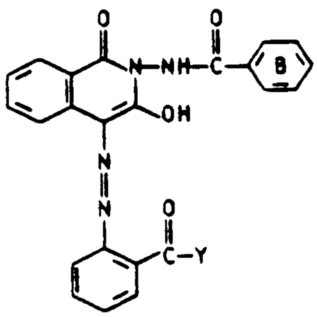

(II)

where

Y is $C_6$-$C_{20}$-alkoxy which may be interrupted by one or more oxygen atoms, and the ring B can be substituted.

**2.** A colorant mixture as claimed in claim 1, wherein Y is $C_8$-$C_{14}$-alkoxy.

**3.** A colorant mixture as claimed in claim 1, which contains from 55 to 95% by weight of an isoquinoline-azo pigment of the formula I and from 45 to 5% by weight of an isoquinoline-azo dye of the formula II.

**4.** An isoquinoline-azo dye of the formula II

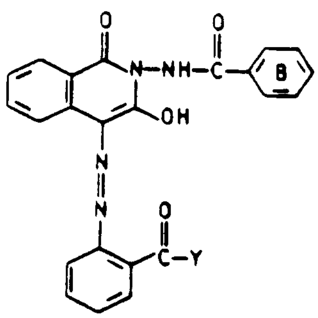

(II)

where Y is $C_6$-$C_{20}$-alkoxy which may be interrupted by one or more oxygen atoms and the ring B can be substituted.

**5.** Use of a colorant mixture as claimed in claim 1 in a printing ink.

## Revendications

**1.** Mélanges de colorants contenant des pigments azoïques de la série des isoquinoléines de formule I

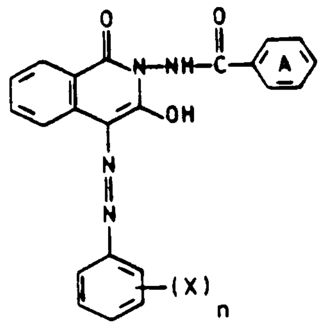

(I),

dans laquelle

X est mis pour un atome de chlore, de brome ou pour un radical alcoxy en $C_1$-$C_4$ ou nitro,

n est mis pour 1, 2 ou 3 et le noyau A peut être substitué,

et des colorants azöiques de la série des isoquinoléines de formule II

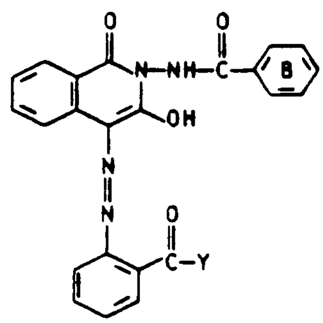

(II),

dans laquelle

Y est mis pour un radical alcoxy en $C_6$-$C_{20}$ qui est éventuellement interrompu par un ou plusieurs atomes d'oxygène, et le noyau B peut être substitué.

2. Mélanges de colorants selon la revendication 1, caractérisés en ce que Y est mis pour un radical alcoxy en $C_8$-$C_{14}$.

3. Mélanges de colorants selon la revendication 1, caractérisés en ce qu'ils contiennent de 55 à 95% en poids de pigments azoïques de la série des isoquinoléines de formule I et de 45 à 5% en poids de colorants azoïques de la série des isoquinoléines de formule II.

4. Colorants azoïques de la série des isoquinoléines de formule II

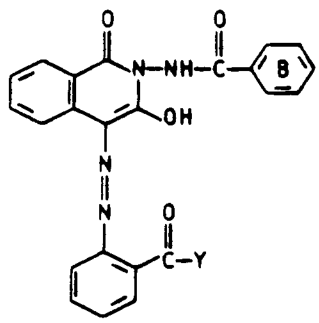

(II),

dans laquelle Y est mis pour un radical alcoxy en $C_6$-$C_{20}$ qui est éventuellement interrompu par un ou plusieurs atomes d'oxygène, et le noyau B peut être substitué.

**5.** Utilisation des mélanges de colorants selon la revendication 1 pour des encres d'imprimerie.